# EUROPEAN PATENT APPLICATION

(11) **EP 1 065 219 A1**
(43) Date of publication of application: **03.01.2001**
(21) Application number: 99305243.0
(22) Date of filing: 02.07.1999
(51) Int. Cl.: C08F 2/06

(54) **Glycerol-based fluidifying substance**

(71) Applicant: Exchem plc, London WC1A 1NF (GB)
(72) Inventor: Spensley, Robert Hardy, Alfreton, Derbyshire (GB)
(74) Representative: McNally, Roisin

(57) **Abstract**

A fluidifying substance for a non-pharmaceutical polymerisable composition wherein the substance is or includes glycerol is described. The substance preferably comprises glycerol in admixture with water, and possibly other reagents. The glycerol-based substance is inert. A polymeric composition of the present invention is suitable for use as a grout, adhesive etc in a number of situations.

## Description

Inert substances are commonly employed to fluidify the pre-set component of a load-bearing polymerisable composition, and can be used as liquid carriers for polymerisation initiators therein. However, after polymerisation the composition contains entrapped molecules of the inert liquid substance, which adversely affect mechanical properties of the set composition, by for example lowering its strength and creep resistance, thereby reducing the capacity of the composition to withstand sustained loading.

Water may be used as the inert liquid substance and has a relatively small effect on mechanical properties of the set composition, for a similar level of incorporation to other inert liquid substances. However, the volatility of water at ambient temperatures and humidities can lead to undesirable drying out or increased viscosity of the pre-set components of the composition in which it is incorporated.

Other than water, inert liquid substances, which have been used to fluidify the pre-set component of a polymerisable composition, have been typically certain esters of carboxylic acids such as di-alkyl phthalates, long-chain alkyl benzoates, chlorinated hydrocarbons such as the CERECLOR (TM) range (Imperial Chemical Industries), glycols such as propylene glycol, polyglycols such as polyethylene glycol or polypropylene glycol or silicone oils and blends thereof.

In addition to their unfavourable effect on the mechanical properties of the set composition, these substances compared with water are almost invariably more toxic to health and the environment. They also confer an inferior thermal stability to certain preferred free radical initiator(s) dispersed within them. Furthermore, some of the inert substances are immiscible with water so water cannot then serve as a convenient flushing fluid in the preparation or use of the composition.

Glycerol is known in the pharmaceutical field to be used in certain pharmaceutical compositions as a carrier for di-benzoyl peroxide, a known polymerisation initiator. Glycerol is a fluid of low toxicity and is also a medium in which di-benzoyl peroxide has stability against self-decomposition at elevated ambient temperatures. With regard to these attributes glycerol is a suitable inert liquid substance conventionally employed in the pharmaceutical field.

Surprisingly it has now been found that glycerol may be used as a very effective fluidifying element of a substance to fluidify the pre-set component of a load-bearing, and indeed any general non-pharmaceutical polymerisable composition such as a grout or adhesive. Hence, it is an object of the present invention to provide an improved substance to fluidify the pre-set component of a non-pharmaceutical polymerisable composition such as a grout or adhesive.

According to one aspect of the present invention there is provided a fluidifying substance for a non-pharmaceutical polymerisable composition wherein the substance is or includes glycerol.

In one embodiment the substance wholly or substantially comprises glycerol. The substance may comprise glycerol along with 0-10, possibly 0-9.5, parts by weight of water.

Where the composition includes a polymerisation initiator the glycerol and water mixture is preferably employed wholly or substantially as a liquid carrier for the initiator.

Preferably the polymerisation initiator is a diacyl peroxide such as di-benzoyl peroxide.

Optionally, to accelerate the initiating action of the initiator, an accelerator is incorporated into one of the components that does not contain the initiator in a multi-component polymerisable composition.

Preferably the accelerator for di-benzoyl peroxide initiator is a tertiary amine, eg N,N-diethyl aniline or N,N-dimethyl para-toluidine.

Optionally the glycerol and water mixture includes one or more reagents to alter the reactivity of the polymerisation initiator.

Preferably the further reagent is di-butyl phthalate (preferably a 5% solution), which quickens the onset of gelation of the polymerisable liquid after this has been inter-mixed with the di-benzoyl peroxide based component.

Other inert liquid substances which optionally may constitute a minor part of the glycerol-based substance may for example be any of those materials which conventionally have been employed as a liquid carrier for such an initiator.

Preferably the other liquid materials should constitute no more than 20% by weight of the total quantity of inert liquid fluidifying substance.

When water is part of the composition, some or all of it may be admixed with the glycerol part.

Optionally when water is present in the glycerol-based substance, water compatible ingredients may be incorporated into the glycerol mixture so as to modify its properties. For example, incorporation of clay or water-soluble polymer such as CARBOPOL (TM) (B F Goodrich) can modify its rheology.

The fluidifying substance of the present invention can be used to fluidify a one-component polymerisable composition. It can also be used to fluidify one or more components of a multi-component polymerisable composition.

A one-component form of such a composition may be formulated, setting being effected by, for example, the application to the composition of heat or radiation such as ultra-violet rays, gamma rays or electron beam, optionally aided by the incorporation of a latent initiator substance(s) in the composition.

According to a second aspect of the present invention, there is provided a non-pharmaceutical polymerisable composition having at least one pre-set component, wherein the component is fluidified by a substance which is or includes glycerol.

In a preferred embodiment of the invention there is provided a composition, comprising a polymerisable ethylenically unsaturated liquid substance, within which prior to the onset of this polymerisation is incorporated a mixture of glycerol and water within the range of 0.1 to 50% by weight of the substance, wherein the mixture includes 0-10 parts by weight of water in ratio to 1 part of glycerol.

The glycerol-based fluidifying substance mixture constitutes the sole or major part by weight of inert liquid substance incorporated in the composition. The composition after polymerisation is capable of enduring at ambient temperatures an unconfined compressive stress of at least 40 Newtons per square millimetre without fracture.

Preferably the ethylenically unsaturated liquid substance is either a liquid monomer, a mixture of liquid monomers or a liquid polymer/oligomer ester of acrylic acid or methacrylic acid, or a blend of these, optionally incorporating a dissolved ethylenically unsaturated polymer/oligomer.

Examples of monomer are, non-exclusively, styrene, substituted styrene such as tertiary-butyl styrene or para-bromo styrene or vinyl toluene or para-methyl styrene or divinyl benzene or alpha-methyl styrene, alkyl and hydroxyalkyl esters or acrylic acid or methacrylic acid or crotonic acid or maleic acid or fumaric acid or vinyl sulphonic acid, allyl esters of carboxylic acids such as diallyl phthalate, etc or any blend of these. Examples of liquid or solid polymer/oligomer are, non-exclusively, fumarate/maleate based polyester, epoxy acrylate, epoxy methacrylate, urethane acrylate, urethane methacrylate, novolac epoxy acrylate, novolac epoxy methacrylate etc or any blend or hybrid of these.

Preferably any polymerisation initiator used in the composition is di-benzoyl peroxide.

According to a third aspect of the present invention, there is provided a method of fluidifying one or more components of a non-pharmaceutical polymerisable composition wherein the one or more components are admixed with a substance which is or includes glycerol.

In formulating the preferred embodiment of the invention any of the materials which are typically employed in commercial compositions based on polymerisable ethylenically unsaturated substances may be employed.

Such materials may be chemically reactive, for example accelerators, inhibitors or chain transfer agents and may be incorporated into a component of the composition that does not comprise the initiator, except in the case of one component systems. Inhibitors retard the rate of polymerisation and can also prolong the storage life of the resin based component of the composition, an example being hydroquinone. Chain transfer agents limit the length of the polymer chains formed during setting of the composition, an example being dodecyl mercaptan.

Such materials may also be chemically inert, for example particulate solid fillers, rheology modifying agents, shrinkage or expansion additives, air release agents, fibres or pigments.

In a further embodiment of the invention there is provided a composition as herein described for use as a grout/adhesive for embedding, bonding or fixing a reinforcement element, for example a high strength tendon or plate, onto or into a construction material, for example concrete or masonry or ground strata.

In a yet further embodiment of the invention there is provided a composition as herein described for use as an adhesive/patching mortar, an *in situ* flooring material, a vehicle body repair compound, protective coating or as a cast or moulded article.

The present invention is generally useful in load-bearing compositions. The present invention is certainly suited to uses where the set product is required to withstand high/sustained stress in service. In the use of a composition for "permanent" grouting of a fixing or reinforcement tendon in the substrate, a low tendency to creep is a particularly important requirement. If the set composition is not resistant to creep, the grouted fixing/tendon may undergo an undesirable relaxation in stress from its initial value and/or undergo an undesirable irrevocable strain during its service lifetime. Further, if the composition continually experiences stress at values for which it cannot resist creep, the composition will eventually fracture.

The use of glycerol as an inert liquid substance is particularly beneficial with regard to limiting the effects on mechanical properties whenever a high proportion of inert liquid substance relative to polymerisable liquid substance is desired. For instance, a relatively high level of inert liquid substance may be desired in order to facilitate the physical intermixing of two components of a capsule or cartridge bonding composition at the point of use, or to assist the flow or proportioning of the components of a pumpable or pourable form of the composition.

Several embodiments of fluidifying substances according to the present invention exhibit improved qualities over previous fluidifying agents. The use of a glycerol based fluidifying substance means that the fluidifying substance is non-toxic, has a small effect on the mechanical properties of the set composition within which it is used, and water can be used as a flushing medium for the prepared compositions. In addition not only does the glycerol based fluidifying substance provide both resistance to chemical attack and a stable medium for radical polymerisation initiators, but also, because of the low volatility of glycerol, the glycerol based fluidifying substance does not have the problems of a water based fluidifying agent, namely those of drying out and high viscosity of the pre-set composition.

Whilst any known method may be employed for initiating the setting of a polymerisation composition, a free radical mechanism is often employed. A free radical initiator is normally incorporated in the composition for this purpose, and in the pre-set state of the composition it is incorporated, except in one component compositions, in a separate component to that comprising the polymerisable liquid substance. Representative examples of free radical initiators are: diacyl peroxides, such as dibenzoyl peroxide or bis (2,4 dichlorobenzoyl) peroxide or di-lauroyl peroxide; tertiary butyl peroxy - 2 - ethyl hexoate; cumene hydroperoxide; peresters, such as tertiary butyl perbenzoate; azo compounds, such as azodiisobutyronitrile; keto peroxides, such as methyl ethyl ketone peroxide. In order to accelerate the generation of free radicals from such initiators, an accelerator is commonly employed in one of the other components, representative examples being tertiary amine, such as N,N-dimethyl aniline and N,N-dimethyl para-toluidine, aldehyde-amine condensation product, organic sulphonyl chlorides, organic salts of a transition metal, such as cobalt naphthenate and copper octoate or mixtures thereof. The free radical initiator is typically incorporated at about 0.5% to about 3% by weight of the polymerisable substance.

The invention is illustrated by reference to the following example.

### Example 1

The composition of the invention may be based on two components of the formulation described as an example of a rock bolt capsule composition in Great Britain Patent No. 2274894. The two components of the composition, in its pre-set state, are the Resin component R, and the Catalyst component C. Both components have the physical form of a liquid paste, so enabling R and C to be pumped into the large and small compartments respectively of an elongated twin-component capsule. The ratio of R to C per unit length of capsule may be varied within the range 10/1 to 35/1 by weight. The formulations of R and C are as follows.

| **Ingredient** | **Weight** | **Weight % range** | **Type** |
|---|---|---|---|
| Resin component R | | | |
| | | | Ethylenically |
| **CRYSTIC 3601A (TM)** | | | unsaturated |
| | | | liquid substance |
| styrene monomer part | 9 | 8.0-12.0 | (essential |
| | | | reactant) |
| polyester part | 11 | 8.0-12.0 | |
| | | | Ethylenically |
| | | | unsaturated |
| N,N-diethylaniline | 0.2 | 0.05-0.40 | polymer |
| (tertiary amine) | | | (essential |
| | | | reactant) |
| | | | Polymerisation |
| **CABOSIL M5 (TM)** | 0.3 | 0.1-0.4 | accelerator |
| (pyrogenic silica) | | | (essential |
| | | | reactant) |
| | | | |
| 50:50 Blend of **TRUCARB 298 (TM)** | 79.5 | 65-83 | Rheology- |
| **and TRUCARB 52 (TM)** | | | control agent |
| (powdered limestone mineral) | | | (auxiliary) |
| | | | |
| | | | Particulate inert |
| | | | filler (auxiliary) |
| Catalyst component, C. | | | Polymerisation |
| | | | initiator |
| **LUCIDOL DAMPED (TM)** | | | (essential |
| (di-benzoyl peroxide part) | 10 | 5-20 | reactant) |
| | | | |
| **LUCIDOL DAMPED (TM)** | 3.3 | | Inert liquid |
| (water part) )liquid | | 15-30 | substance |
| **Water** )plasticizer | 2.7 | | predominantly |
| **Glycerol** ) | 19 | | glycerol (water) |
| | | | (essential |
| **TRUCARB 170 (TM)** )powdered | 45 | 50-80 | fluidifier for C) |
| **SNOWCAL 30 (TM)** )mineral | 20 | | |
| | | | Particulate inert |
| | | | filler |
| | | | (auxiliary) |

The set composition, made by intermixing these components in the ratio R/C within the range 10/1-35/1 by weight, has an unconfined compressive strength in excess of 80 Newtons per square millimetre after 24 hours at 20°C, measured according to British Standard test method 6319. This strength makes the composition useful for the permanent fixing of a mechanically stressed rock bolt.

One use of the composition of the invention is as a grout for anchoring/bonding a fixing element into or onto concrete or masonry or ground strata. Settable compositions based on a polymerisable ethylenically unsaturated liquid substance have been extensively used world-wide for this purpose for over 30 years. For this use it is common practice to formulate the composition in the form of two components: component (1) comprises the polymerisable liquid substance, a polymerisation accelerator, particulate inert filler and a rheology modifying agent; component (2) comprises a free radical polymerisation initiator, inert liquid substance, particulate inert filler and a rheology modifying agent. For convenience, the components are commonly packaged in the separate components of a capsule or cartridge, and the composition is caused to set after a short delay simply by intermixing components (1) and (2) immediately prior to placement of the composition. The components of a capsule can be intermixed by rotating the fixing element axially through the capsule, whilst those of a cartridge can be intermixed by co-extruding them through a static mixer in a nozzle attached to the cartridge.

Use of a glycerol-based substance as the inert liquid substance of the above composition upgrades the mechanical properties of the set product so that the product is more able to bear mechanical stress without structural impairment during its expected service lifetime.

## Claims

1. A fluidifying substance for a non-pharmaceutical polymerisable composition wherein the substance is or includes glycerol.

2. A substance as claimed in Claim 1 wherein the substance is glycerol.

3. A substance as claimed in Claim 1 which comprises glycerol and 0 to 10 parts of water.

4. A substance as claimed in any of Claims 1 to 3 to fluidify a polymerisation initiator in the composition.

5. A substance as claimed in Claim 4 wherein the polymerisation initiator is a diacyl peroxide.

6. A substance as claimed in Claim 5 wherein the diacyl peroxide is di-benzyl peroxide.

7. A substance as claimed in any one of Claims 4-6 wherein the substance includes one or more reagents to alter the reactivity of the polymerisation initiator.

8. A substance as claimed in Claim 7 wherein the reagent is di-butyl phthalate.

9. A substance as claimed in any one of the preceding Claims which includes one or more conventional polymerisation initiator liquid carrier materials.

10. A substance as claimed in Claim 9 wherein the or all conventional carrier materials constitute no more than 20% by weight of the total quantity of fluidifying substance.

11. A substance as claimed in any one of the preceding Claims to fluidify a one-component polymerisable composition.

12. A substance as claimed in any one of Claims 1-10 to fluidify one or more components of a multi-component polymerisable composition.

13. A non-pharmaceutical polymerisable composition having at least one pre-set component, wherein the or a component is fluidified by a substance as defined in any one of Claims 1-10.

14. A composition as claimed in Claim 13 wherein the composition includes a polymerisation accelerator.

15. A composition as claimed in Claim 14 being a multi-component composition, wherein the accelerator is incorporated into the component or one of the components that does not contain the initiator.

16. A composition as claimed in Claim 14 or Claim 15 wherein the polymerisation initiator is di-benzyl peroxide, and the accelerator is N,N-diethyl aniline or N,N-dimethyl para-toluidine.

17. A composition as claimed in any one of Claims 13 to 16 comprising a polymerisable ethylenically unsaturated liquid substance, within which prior to the onset of polymerisation is incorporated a mixture of glycerol and water within the range of 0.1 to 50% by weight of the polymerisable substance, wherein the mixture includes 0-10 parts by weight of water in ratio to one part of glycerol.

18. A composition as claimed in any one of Claims 13 to 17 wherein the glycerol-based fluidifying substance constitutes the sole or major part by weight of inert liquid substance incorporated in the composition.

19. A composition as claimed in Claim 17 or Claim 18 wherein the ethylenically unsaturated liquid substance is either a liquid monomer, a mixture of liquid monomers or a liquid polymer/oligomer ester of acrylic acid or methacrylic acid, or a blend of these.

20. A composition as claimed in Claim 19 incorporating a dissolved ethylenically unsaturated polymer/oligomer.

21. A composition as claimed in any one of Claims 13 to 20 for use as a grout/adhesive for embedding, bonding or fixing a reinforcement element onto or into a construction material.

22. A composition as claimed in any one of Claims 13 to 20 for use as an adhesive/patching mortar, an in situ flooring material, a vehicle body repair compound, protective coating or as a cast or moulded article.

23. A method of fluidifying one or more components of a non-pharmaceutical polymerisable composition wherein the or one or more components are admixed with a substance which is or includes glycerol.

24. A method as claimed in Claim 23 wherein the or one or more components are admixed with a substance comprising glycerol and 0 to 10 parts of water.

25. A fluidifying substance or polymerisable composition substantially as herein described with reference to the Example.
